# EUROPÄISCHE PATENTANMELDUNG

(11) **EP 0 729 877 A2**
(43) Veröffentlichungstag der Anmeldung: **04.09.1996**
(21) Anmeldenummer: 95120742.2
(22) Anmeldetag: 29.12.1995
(51) Int. Cl.: B62D 27/06, B60B 3/16, F16B 5/02, B62D 21/09

(54) **Schraubverbindung für Flachteile**

(30) Priorität: 06.01.1995 SI 9500005
(71) Anmelder: TOVARNA POSEBNIH VOZIL NOVO MESTO, d.d., 68000 Novo Mesto (SI)
(72) Erfinder: Ljubec, Vanja, SI-68000 Novo Mesto (SI)
(74) Vertreter: Viering, Jentschura & Partner

(57) **Zusammenfassung**

Die Erfindung betrifft eine Schraubverbindung für Flachteile mit einem kegelstumpfförmigen Schraubenkopfansatz und einem kegelstumpfförmigen Mutteransatz zum gegenseitigen Verbinden oder Sichern von zweckmässigerweise zwei Elementen, deren mindestens eine Ausnehmung zur Aufnahme des Schraubenkopfansatzes trichterförmig ausgebildet ist. Die Schraubverbindung basiert auf unmittelbarer Zusammenarbeit des kegelstumpfförmigen Ansatzes (5) und eines lotrecht auf seine Oberfläche gestellten Kegelversenkteils (9) eines Grundträgers (1). Die Konizität (α) des Schraubenkopfansatzes (5) und die Konizität (β) des Mutteransatzes (7) sind gegenseitig derart bestimmt, dass eine gegebene Mantellinie des einen Ansatzes (5) und eine gegebene, in derselben Beobachtungsebene liegende Mantellinie des anderen Ansatzes (7) zueinander einen rechten Winkel bilden. Die Abmessung der Ausnehmung (8) des Grundflachträgers ist so bestimmt, dass der Kegelversenkteil (9) des Grundflachträgers beim ersten Zusammensetzen der Schraubverbindung den Ansatz (5) angreift, bevor er das Grösstdurchmesser-Ende des Ansatzes erreicht hat. Der Anbauflachträger (2) ist dem Grundflachträger (1) angepasst und zwischen der Mantelfläche einer Ausnehmung (10) des Anbauflachträgers und der Mantelfläche des kegelstumpfförmigen Ansatzes (5) ist ein Spiel, das lose Paarung gewährleistet, vorgesehen.

## Beschreibung

Die Erfindung betrifft eine Schraubverbindung für Flachteile mit einem kegelstumpfförmigen Schraubenkopfansatz und einem kegelstumpfförmigen Mutteransatz zum gegenseitigen Verbinden oder Sichern von zweckmässigerweise zwei Elementen, deren mindestens eine Ausnehmung zur Aufnahme vom Schraubenkopfansatz trichterförmig ausgebildet ist.

Gegenstände obiger Gattung werden etwa in Klasse F 16 B 5/02 ("Maschinenbau") der IPK5 eingereiht.

Die Erfindung betrifft insbesondere die Schraubverbindung für Flachteile eines Fahrgestells für (Kraft-)Fahrzeuge oder Fahrzeuganhänger.

Gegenstände obiger Gattung werden etwa in Klasse B 62 D 21/02 ("Gleislose Landfahrzeuge") der IPK5 eingereiht.

Eine Schraubverbindung für Flachteile der oben angegebenen Art findet man auf dem Maschinenbaugebiet z.B. bei der Radbefestigung an der Achsenflansche einer Kraftfahrzeugachse. Derartige Verbindungen sind auf diesem Fachgebiet sogar normenweise vorgeschrieben (vgl. z.B. DIN 74361). Die Befestigung von Felgen ist im Übrigen aus der Patentliteratur der IPK5-Klasse B 60 B 23/00 bekannt.

Was die oben definierte Schraubverbindung für Flachteile angeht, sind ausserdem auf dem Fachgebiet des Transports mehrere Schraubverbindungen bei Fahrgestellen für Kraftfahrzeuge oder Fahrzeuganhänger bekannt.

Die folgenden Patentschriften des Standes der Technik sind beim Verfassen des Erfindungssatzes berücksichtigt worden:

| **Schrift** | **Erfinder** | **Weiteres Glied der Patentfamilie** |
|---|---|---|
| DE 26 07 154 C2 | Köhler, R. | |
| DE 27 02 243 C2 | Wöhrle, R. | |
| DE 40 31 007 C2 | Wöhrle, R. | EP 0 479 115 A2 |
| DE 90 13 691 U | Müller, A. | EP 0 479 134 A1 |
| DE 90 13 693 U | Werdlich, A. | EP 0 479 133 A2 |

Ausser dem einleitend beschriebenen gemeinsamen baulichen Merkmal sind den angeführten Schraubverbindungen auf dem Maschinenbau- und Transportgebiet auch die Merkmale gemeinsam, dass sämtliche betreffenden Schraubverbindungen bei demselben technischen Gegenstand vorkommen und sie zufälligen dauernden dynamischen Beanspruchungen ausgesetzt sind, und dass ausserdem die betreffende Schraubverbindung im Einbauzustand niemals einzeln verwendet wird.

Der Erfindung liegt nunmehr das Problem zugrunde, die einleitend definierte Schraubverbindung für Flachteile in der Weise zu überarbeiten, dass sie sowohl bei der Radbefestigung als auch bei dem Fahrgestell desselben Objekts weitgehend einheitlich verwendbar ist. Es ist also die Aufgabe der Erfindung, eine zwei oder mehrere Blechteile zusammenhaltende Schraubverbindung für Flachteile etwa im Fahrgestell eines Fahrzeuganhängers zu schaffen, bei der eine Schraube der Rad-Flansche-Verbindung verwendet wird.

Bei einer einen kegelstumpfförmigen Schraubenkopfansatz und einen kegelstumpfförmigen Mutteransatz aufweisenden Schraubverbindung für Flachteile zum gegenseitigen Verbinden oder Sichern von zweckmässigerweise zwei Elementen, deren mindestens eine Ausnehmung zur Aufnahme vom Schraubenkopfansatz trichterförmig ausgebildet ist, ist das oben angegebene Problem erfindungsgemäss dadurch gelöst, dass die Schraubverbindung für Flachteile auf einer unmittelbaren Zusammenarbeit des kegelstumpfförmigen Ansatzes, z.B. Schraubenkopfansatzes, und eines lotrecht darauf gestellten tellerartig ausgebildeten Teils eines im Übrigen flachen Grundträgers basiert. Die zwei dabei beteiligten Konizitäten der kegelstumpfförmigen Ansätze sind gegenseitig derart bestimmt, dass eine gegebene Mantellinie des einen Ansatzes und eine gegebene, in derselben Beobachtungsebene liegende Mantellinie des anderen Ansatzes zueinander einen Winkel, zweckmässigerweise von 90° (rechter Winkel), bilden. Die Abmessung der Ausnehmung des Grundflachträgers ist vorteihafterweise so bestimmt, dass der Kegelversenkteil des Grundflachträgers beim ersten Zusammensetzen der Schraubverbindung für Flachteile den kegelstumpfförmigen Ansatz, gegebenenfalls den Schraubenkopfansatz, angreift, bevor es das Grösstdurchmesser-Ende des Ansatzes erreicht hat. Erfinderisch ist auch, dass der Anbauflachträger demäss seiner Ausbildung dem Grundflachträger angepasst ist, wobei zwischen der Mantelfläche der Ausnehmung des Anbauflachträgers und der Mantelfläche des kegelstumpfförmigen Ansatzes ein Spiel, das lose Paarung gewährleistet, vorgesehen ist.

Die Erfindung ist nachstehend aufgrund eines der beigelegten Zeichnung entnehmbaren Ausführungsbeispiels näher beschrieben.

Die einzige Zeichung zeigt den Axialschnitt einer zwei Flachteile verbindenden Schraubverbindung.

Grundsätzlich handelt es sich um einen Grundflachträger 1, zu dem ein Anbauflachträger 2 lösbar angeschlossen ist.

Verwendet man diese Schraubverbindung für Flachteile zum Verbinden von blechartigen Elementen eines Fahrgestells für Kraftfahrzeuge, so dienen als der Grundflachträger 1 der Längsträger des Fahrgestells und als der Anbauflachträger 2 der Holm des Fahrgestells, die Zuggabel, die Anbaukonsole des Oberbaus u.ä., was alles von der Anbringungsstelle der Schraubverbindung für Flachteile abhängt.

Es versteht sich, dass unter der Verwendung der erfinderischen Lehre mehr als nur zwei Blech- bzw. Flachteile in die Schraubverbindung für Flachteile eingegliedert werden können und dass ein zweiter, ein dritter usw. Teil eines Satzes von Elementen nicht unbedingt blechartig bzw. flach ist.

Die vorgeschlagene Schraubverbindung für Flachteile basiert auf einer an sich bekannten Kopfschraube 3, an deren Kopf 4 ein kegelstumpfförmiger Ansatz 5 schaftseitig angeformt ist, und einer Mutter 6, an deren zum kegelstumpfförmigen Ansatz 5 der Kopfschraube 3 weisenden Seite ein kegelstumpfförmiger Ansatz 7 angeformt ist.

In einer vorteilhaften Ausbildung der Erfindung sind die zwei kegelstumpfförmigen Ansätze 5, 7 jeweils einstückig mit dem zugehörigen Kopf 4 der Kopfschraube bzw. mit der Mutter 6 ausgebildet, was jedoch nicht unbedingt nötig ist. Die kegelstumpfförmigen Ansätze 5, 7 können alternativ als Unterlegteile des Schraubenkopfes 4 bzw. der Mutter 6 ausgebildet werden, was insbesondere dann in Betracht kommt, wenn für die Schraube, die Mutter und die Unterlegteile unterschiedliche Werkstoffe zu verwenden sind oder irgendwelche anderen technischen Anforderungen separate Teile verlangen.

Da es sich bei den Ansätzen 5, 7 um kegelstumpfförmige Mantelflächen handelt, ist ihre Konizität ihr wesentlicher Parameter. Die Konizität ist in der Zeichung beim Kopfansatz 5 durch Winkel α und beim Mutteransatz 7 durch Winkel β angedeutet.

Die Wahl der Grösse des jeweiligen Winkels α, β hängt im Prinzip von den gegebenen Einbauverhältnissen ab, so dass die Bestimmung von Winkeln α, β an sich eine Sache des Projektierens ist; für die Erfindung ist jedoch das gegenseitige Verhältnis dieser Winkel α, β wesentlich. Erfindungsgemäss sind die Winkel α, β so zueinander bestimmt, dass eine gegebene Mantellinie des einen Ansatzes und eine gegebene, in derselben Beobachtungsebene liegende Mantellinie des anderen Ansatzes zueinander einen Winkel δ einschliessen, der zweckmässigerweise 90° (rechter Winkel) beträgt.

Da die Konizität α des Schraubenkopfansatzes 5 (der Schraube aus dem Stand der Technik) 60° beträgt, folgt daraus eine Konizität β des Ansatzes 7 der erfindungsgemässen Mutter von 120°. Die erfindungsgemässe Mutter 6 ist somit eine modifizierte *Kegelmutter* der DIN 74361, worin es sich um die 60°-Kegelwinkel-Radmutter handelt.

Das Wesentliche bei der erfindungsgemässen Schraubverbindung für Flachteile ist die Zusammenarbeit des Grundflachträgers 1 und des kegelstumpfförmigen Schraubenkopfansatzes 5. Zur optimalen Zusammenarbeit dieser zwei Teile ist ein genügend grosser Flächenabschnitt des Grundflachträgers 1 ringartig um eine Ausnehmung 8 so umgeformt, dass sich um die Ausnehmung 8 ein Kegelversenkteil 9 des Grundflachträgers 1 ergibt, der im zusammengesetzten Zustand der Schraubverbindung für Flachteile senkrecht zur Oberfläche des Schraubenkopfansatzes 5 gestellt ist, wobei die Mantelfläche der Ausnehmung 8 mit der des Schraubenkopfansatzes 5 übereinstimmt.

Die vorliegende Schraubverbindung für Flachteile ist schon grundlegend für schwere Arbeitsbedingungen vorgesehen. Indem die Beanspruchungskräfte vom Schraubenkopfansatz 5 her parallel zur Oberfläche des Kegelversenkteils 9, d.h. senkrecht zur Mantelfläche der Ausnehmung 8, in den Kegelversenkteil 9 des Grundflachträgers 1 geleitet werden, wird es ermöglicht, dass der Grundflachträger 1 mit seiner Ausnehmung 8 optimal auf der Oberfläche des Schraubenkopfansatzes 5 "sitzt". Die entweder bei der Ausarbeitung der eigentlichen Ausnehmung oder/und beim Anbringen einer Metalschutzschicht, z.B. bei Verzinkung verursachten Rauhkeit und Unebenheit der Mantelfläche der Ausnehmung 8 passen sich während des Betriebsablaufs an die Oberfläche des Schraubenkopfansatzes 5 an, ohne Gefahr zu laufen, dass dadurch entweder die Schraubverbindung in ihrer Gesamtheit oder die Qualität des Oberflächenschutzes der Elemente beeinträchtigt wird.

Die Grösse der Ausnehmung 8 ist zweckmässigerweise so bestimmt, dass beim ersten Zusammensetzen der Schraubverbindung der Kegelversenkteil 9 genügend vor dem Grösstdurchmesser-Endrand des Schraubenkopfansatzes 5 (wie veranschaulicht) darauf aufläuft.

Der Anbauflachträger 2, der zur Eingliederung in die betreffende Schraubverbindung für Flachteile mit einer Ausnehmung 10 versehen ist, ist im Bereich der Schraubverbindung für Flachteile zweckmässigerweise gemäss seiner Konfiguration der Ausbildung des Grundflachträgers 1 angepasst, d.h. dass ein genügend grosser Bereich des Anbauflachträgers 2 ringförmig um die Ausnehmung 10 derart umgeformt (versenkt) ist, dass um die Ausnehmung 10 ein Kegelversenkteil 11 des Anbauflachträgers 2 vorliegt, der im zusammengesetzten Zustand der Schraubverbindung für Flachteile auf dem Kegelversenkteil 9 des Grundflachträgers 1 passend aufliegt und somit (auch) senkrecht auf die Oberfläche des Schraubenkopfansatzes 5 gestellt ist. Zwischen der Mantelfläche der Ausnehmung 10 und der Mantelfläche des Schraubenkopfansatzes 5 ist eine lose Paarung vorgesehen.

Wenn die zwei Träger 1, 2 durch mehr als eine einzige Schraubverbindung für Flachteile zusammengepresst sind, ist die Anbringungsstelle der Kopfschrauben 3 durch die Ausnehmungen 8 des Grundflachträgers 1 bestimmt und eventuelle Nichtübereinstimmungen der Teilung der Ausnehmungen 10 des Anbauflachträgers 2 gegenüber der Teilung der Ausnehmungen 8 des Grundflachträgers 1 kompensieren sich einfach aufgrund der vorgesehenen Lockerheit der Ausnehmungen 10 des Anbauflachträgers 2.

Die Axialabmessung des Schraubenkopfansatzes 5 ist gegenüber der Gesamtstärke des darauf gesetzten Elementensatzes vorteilhafterweise so bestimmt, dass sich im zusammengesetzten Zustand sämtliche Kegelversenkteile 9, 11 (usw.) der Träger 1, 2 (usw.) im Bereich des Schraubenkopfansatzes 5 befinden.

Das Kegelversenkteil 11 des Anbauflachträgers 2 wird vom kegelstumpfförmigen Ansatz 7 der Mutter 6 unmittelbar gepresst.

Das Problem der Sicherung der Schraubverbindung gegen Lockern bzw. gegen unabsichtliches Auseinanderfallen ist auch bei der erfindungsgemässen Schraubverbindung für Flachteile auf übliche Weise gelöst.

Die vorgeschlagene Schraubverbindung für Flachteile basiert auf der Selbstanpassung (Fitten) ihrer Bestandteile, so dass sie keine strenge Fertigungsgenauigkeit erfordert.

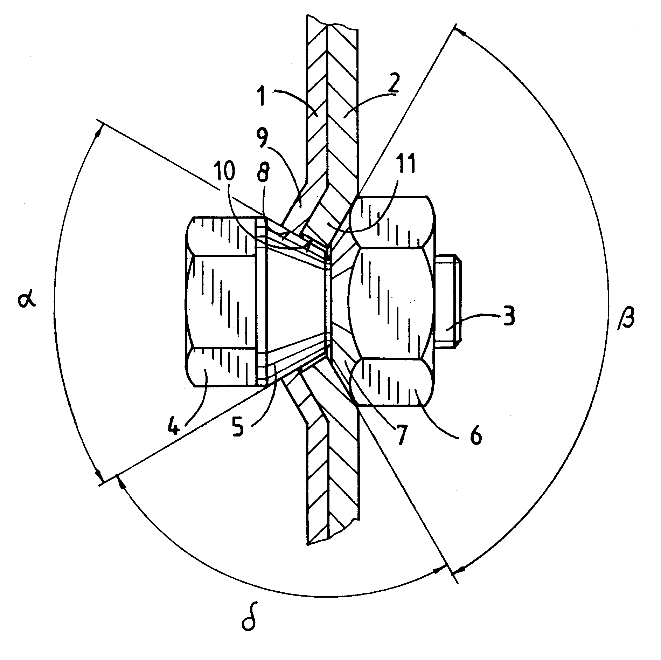

## Patentansprüche

1. Schraubverbindung für Flachteile mit einem kegelstumpfförmigen Schraubenkopfansatz und einem kegelstumpfförmigen Mutteransatz zum gegenseitigen Verbinden oder Sichern von zweckmässigerweise zwei Elementen, deren mindestens eine Ausnehmung zur Aufnahme des Schraubenkopfansatzes trichterförmig ausgebildet ist, *dadurch gekennzeichnet*, dass sie auf unmittelbarer Zusammenarbeit des kegelstumpfförmigen Ansatzes (5) und eines lotrecht auf seine Oberfläche gestellten tellerartig ausgebildeten Teils (9) eines im übrigen flachen Grundträgers (1) basiert.

2. Schraubverbindung nach Anspruch 1, *dadurch gekennzeichnet*, dass die Konizität (α) des Schraubenkopfansatzes (5) und die Konizität (β) des Mutteransatzes (7) gegenseitig derart bestimmt sind, dass eine gegebene Mantellinie des einen Ansatzes (5) und eine gegebene, in derselben Beobachtungsebene liegende Mantellinie des anderen Ansatzes (7) zueinander einen Winkel (δ), zweckmässigerweise von 90° (rechter Winkel), bilden.

3. Schraubverbindung nach Anspruch 1 oder 2, *dadurch gekennzeichnet*, dass die Abmessung der Ausnehmung (8) des Grundflachträgers vorteilhafterweise so bestimmt ist, dass der Kegelversenkteil (9) des Grundflachträgers beim ersten Zusammensetzen der Schraubverbindung für Flachteile den kegelstumpfförmigen Ansatz (5) angreift, bevor es das Grösstdurchmesser-Ende des Ansatzes erreicht hat.

4. Schraubverbindung nach Anspruch 1, 2 oder 3, *dadurch gekennzeichnet*, dass der Anbauflachträger (2) gemäss seiner Ausbildung dem Grundflachträger (1) angepasst ist und zwischen der Mantelfläche einer Ausnehmung (10) des Anbauflachträgers und der Mantelfläche des kegelstumpfförmigen Ansatzes (5) ein Spiel, das lose Paarung gewährleistet, vorgesehen ist.
